# EUROPEAN PATENT SPECIFICATION

(11) **EP 2 668 020 B1**
(45) Date of publication and mention of the grant of the patent: **04.03.2015**
(21) Application number: 12701445.4
(22) Date of filing: 18.01.2012
(51) Int. Cl.: B29C 63/10, F17C 1/16

(54) **METHOD TO IMPROVE THE BARRIER PROPERTIES OF COMPOSITE GAS CYLINDERS AND HIGH PRESSURE GAS CYLINDER HAVING ENHANCED BARRIER PROPERTIES**
VERFAHREN ZUR VERBESSERUNG DER BARRIEREEIGENSCHAFTEN VON VERBUNDGASZYLINDERN UND HOCHDRUCKGASZYLINDER MIT VERBESSERTEN BARRIEREEIGENSCHAFTEN
PROCEDE D'AMELIORATION DES PROPRIETES DE BARRIERE DE BOUTEILLES DE GAZ COMPOSITES ET BOUTEILLE DE GAZ HAUTE PRESSION PRESENTANT DES PROPRIETES DE BARRIERE AMELIOREES

(30) Priority: 26.01.2011 EP 11000592; 15.06.2011 US 201161497411 P
(43) Date of publication of application: 04.12.2013
(73) Proprietor: Basell Polyolefine GmbH, 50389 Wesseling (DE)
(72) Inventor: ANDERNACH, Roland, 40670 Meerbusch (DE); LINDNER, Thomas, 64846 Gross Zimmern (DE)
(74) Representative: Gaverini, Gaetano Luigi Attilio
(86) International application number: PCT/EP2012/000202
(87) International publication number: WO 2012/100923

(56) References cited:
- WO-A1-2011/144232
- US-A1- 2002 088 806
- US-A1- 2010 075 200

## Description

The present invention relates to a method improving the barrier properties of a pressure container of composite material comprising an inner liner made of polymer material, such as polyolefin or a similar material, and an outer, fibre-reinforced, pressure supporting layer.

The invention also relates to a high pressure composite gas cylinder having enhanced barrier properties against the permeation of gaseous or liquid hydrocarbons or other inflammable gases, which is useful as gas container in hospitals, as a fuel tank for gas driven automotive vehicles equipped with a combustion engine and also as propane container for gas stoves in cottages, camping caravans and small crafts or boats for recreational use.

### Prior art

Pressure containers for fluids have several uses, such as gas containers in hospitals and fuel containers for motor vehicles, but also in a smaller scale such as propane containers for gas stoves in cottages, camping caravans and small crafts or boats for recreational use. As a rule, such containers have been manufactured from metal. The metal, however, has the big disadvantage of heavy weight and difficult handling. Moreover there is often a problem of knowing how much of the original content is still left in the bottle or container.

One solution to this problem can be the pressure container's manufacture using composite material, making the container of lighter weight and more easy to handle. Because of the risk of explosion and accidents, many and strict requirements are imposed with respect to such pressure containers. Thus, the safety aspect is very essential in this connection. In particular, it is important that the container is impact resistant, so that leakages and explosions with possible following injuries to persons are reliably avoided. In addition, the barrier properties of the pressure container against the permeation of the gas comprised inside must be sufficiently high.

A solution wherein the pressure container has been manufactured of composite materials is described in EP 0 810 081 A1, including a method for manufacturing pressure containers, wherein an inner, gas-impenetrable liner made of plastic first is blow moulded and thereafter an outer layer consisting of a fibre-reinforced plastic which has been soaked in a resin bath, is wound around the liner.

However, as the result of poor adhesion between the layers within these composite materials, collapse of the inner liner layer was observed due to service conditions, for example when evacuating the container, giving rise to under-pressure inside the container, or when cooling, so that the temperature of the fluid becomes too low. The industry considers the generally low wetting and adhesive properties of plastic material as a problem. Some of the reasons for this might be that several plastic materials have chemical inert and non-porous surfaces, having low surface tensions. The wetting and adhesive properties of plastic materials may be increased for example by flame treatment or by corona discharge treatment which are known in the art and are ready available to improve adhesion.

High pressure composite gas cylinders used especially for gas driven automotive vehicles equipped with combustion engines are commonly made of blow moulded plastic vessels reinforced with glass fibres applied in a secondary winding process. Stored gases are e.g. LPG (Liquid Pressurized Gas) or CNG (Compressed Natural Gas). The plastic material typically used for the inner liner, i.e. high molecular mass HDPE, has excellent mechanical properties with high sustainability, but it has only limited barrier properties with respect to the gases comprised. As the result of such permeability, composite gas cylinders are losing their load over some time period.

US 2010/075200 A1 discloses a method for improving the barrier properties of composite gas cylinders for the storage of gas, comprising an inner liner made of polyolefin and an outer fibre-reinforced, pressure supporting layer, said method comprising the steps of forming the inner liner, over-moulding the inner liner with a resin to form a gas barrier layer, winding the outer fibre-reinforced, pressure supporting layer, heating and curing.

### Object of the invention

Thus, it was the object of the present invention to provide a method to enhance the barrier properties of composite gas cylinders for the storage of gas, especially if they are used for gas driven automotive vehicles equipped with a combustion engine as a fuel tank.

In addition, it was an object of the invention to provide a composite gas cylinder for the storage of gas having enhanced barrier properties against the permeation of gaseous or liquid hydrocarbons or other inflammable gases, which can be used as gas containers in hospitals, as a fuel tank in gas driven automotive vehicles equipped with a combustion engine and also as propane containers for gas stoves in cottages, camping caravans and small crafts or boats for recreational purposes.

### Subject of the invention

It was surprisingly found that this object is achieved according to the instant invention by wrapping a composite gas cylinder, comprising an inner liner made of polyolefin and a fibre-reinforced, pressure supporting layer, with a plastic film comprising a barrier material in a winding process followed by subsequent heat treatment.

The polymeric film comprising the barrier material acts reliably as a stable and continuous barrier against diffusion of gaseous or liquid hydrocarbons or other inflammable gases. Dense wrapping is achieved by using cling additives.

### Detailed Description

The inner liner of the composite gas cylinder is made of a thermoplastic polymer material, such as polyethylene or a copolymer of ethylene with other olefins having 3 to 10 carbon atoms or polypropylene or copolymers of propylene with ethylene or other 1-olefins having 4 to 10 carbon atoms and may be manufactured by a known process.

Examples for known processes for the manufacture of the inner liner are blow moulding, or extruding or a similar method like injection moulding.

As soon as the inner liner is ready prepared according to one of the afore-mentioned processes, then the preparation continues by either winding around the barrier film by winding stripes of the plastic film comprising barrier material onto the outer surface of the inner liner or winding around the fibre-reinforced, pressure supporting layer.

If the plastic film comprising the barrier material is applied first, then it is in direct contact with the outer surface of the inner liner from inside and with the fibre-reinforced, pressure supporting layer from outside. If the plastic film comprising the barrier material is applied secondly, then it is in direct contact with the fibre-reinforced, pressure supporting layer from inside.

During the winding of the plastic film comprising the barrier material in addition adhesives may be used to improve the adhesion which may be an epoxy-polymer or a similar means or a hot melt or another solvent free adhesive composition. If desired, the barrier film may be applied in two or three or even more layers.

As barrier material polymers are preferably used having a very low permeability for gaseous or liquid hydrocarbons. Such polymers are polyamides like polyhexamethylene adipineamide or poly-epsilon-caprolactame or polyesters like polyethyleneterephthalete or polybutyleneterephthalate or halogen substituted polymers like polyvinylchloride (PVC) or polyvinylidenechloride (PVDC) or fluorine comprising polymers such as polytetrafluorineethylene (PTFE) or ethylene vinylalcohol copolymer (EVOH). In addition, metallization of the surface of a plastic film, e.g. by vapour deposition, is also a suitable method to improve the film's barrier properties.

The barrier properties of the plastic film might be achieved by mono-layer film extrusion of plastic material with very low permeability, suitable for polyamides or polyesters or halogenic polymers, or by multi-layer co-extrusion of semi-permeable plastic materials with tie layers and barrier layers in-between used for PTFE or EVOH or by mono-layer film extrusion of semi-permeable polymers and additional coating with barrier layers, such as metallization.

The flat film may be produced by a casting process, by film extrusion through a slit die on a cooling drum and subsequent orientation in one direction or by bubble blowing film extrusion through an annular die.

The orientation of the extruded film, especially in longitudinal direction, may be effected ba a short-gap-stretching process. That is a process involving transferring a heated polymeric film from a first heated roll having a first radius and revolving in a first radial velocity to a second heated roll having a second radius and revolving in a second radial velocity, that is larger than said first radial velocity, through a gap which is as small as possible. A typical example for a prior art reference describing such processes for orientation is US 6,375,781.

To improve the adhesion of the barrier film at the outer surface of the composite gas cylinder, a final heat treatment is applied. Such heat treatment is performed in a furnance or by blowing hot air at a temperature of from 60 to 200 °C, preferably from 70 to 150 °C, more preferred from 80 to 130 °C, depending from the chemical composition of the barrier material and the plastic film. The treatment is maintained over a time period depending from the temperature applied of about 5 seconds to 5 minutes, preferably from 10 seconds to 3 minutes.

As soon as the outer surface of the inner liner is ready coated and heat treated according to the afore-mentioned processes, then the preparation continues by winding around some fibre-reinforced elements, for example glass fibre bands or treads to support the pressure resistance. These fibre-reinforced bands or treads are preferably applied according to the filament winding process which is well known in the art.

Suitable adhesion between the plastic film comprising the barrier material and the fibre-reinforced, pressure supporting layer is typically obtained by the application of surface corona treatment in combination with adhesives. An epoxy-polymer or a similar means may be used as adhesive. The adhesive may be applied onto the plastic film comprising the barrier material covering the inner liner before winding of the fibre-reinforced, pressure supporting layer onto the plastic film. Alternatively, the adhesive can at first be applied onto the inner side of the fibre-reinforced layer before adhesion on the plastic film comprising the barrier material coating the outer side of the inner liner. The adhesive may also be employed at the same time as the fibre-reinforced, pressure supporting layer is wound onto the plastic film comprising the barrier material on the outer side of the inner liner. In addition, direct contact between the plastic film comprising the barrier material and the fibre reinforced, pressure supporting layer is possible, as well.

### Figures of Drawing

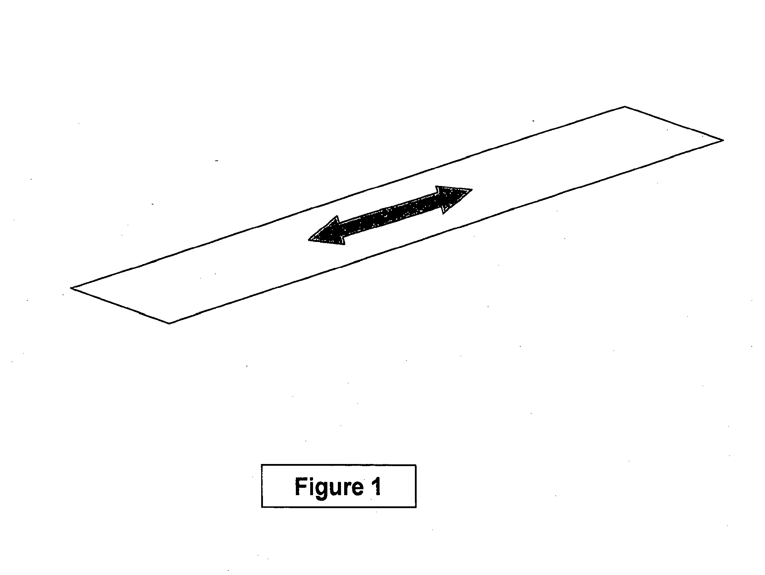

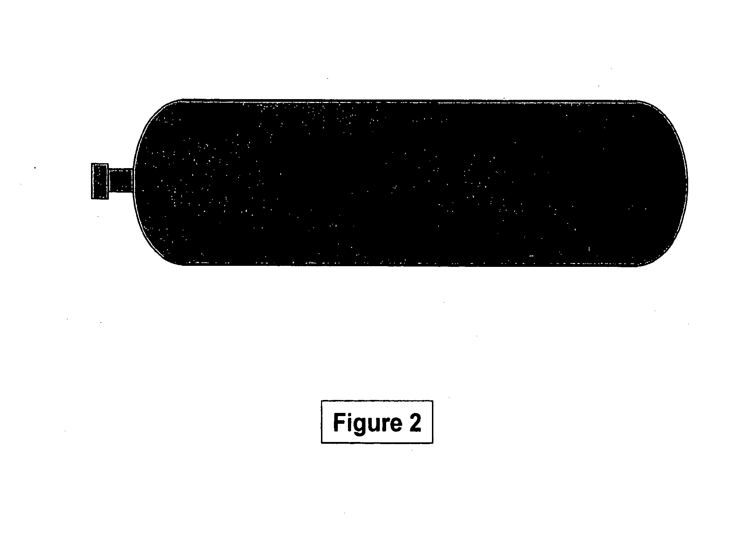

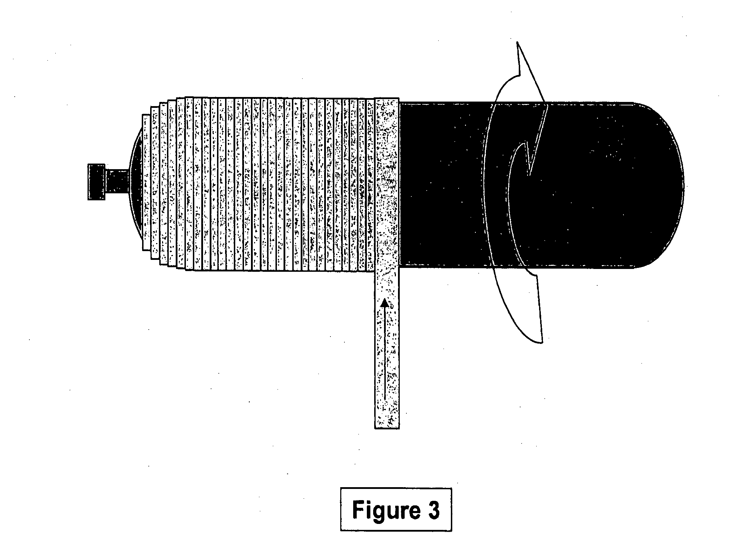

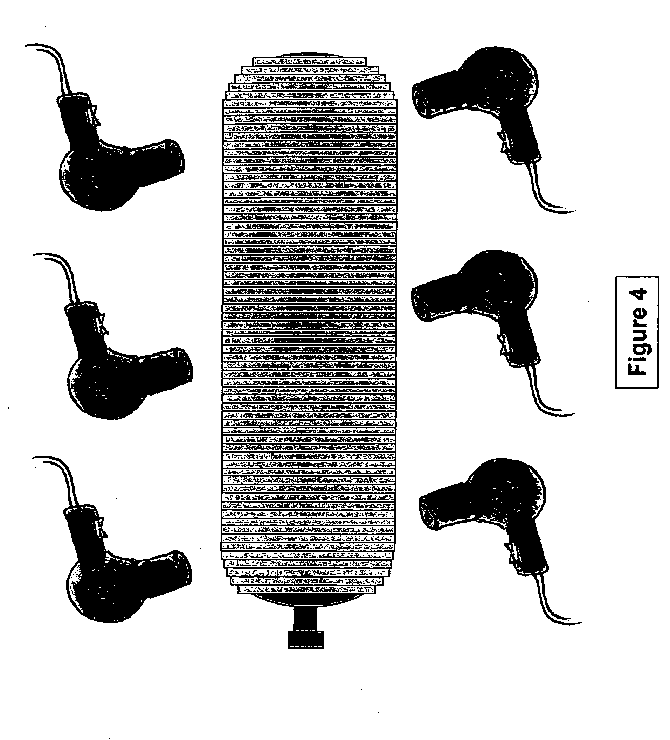

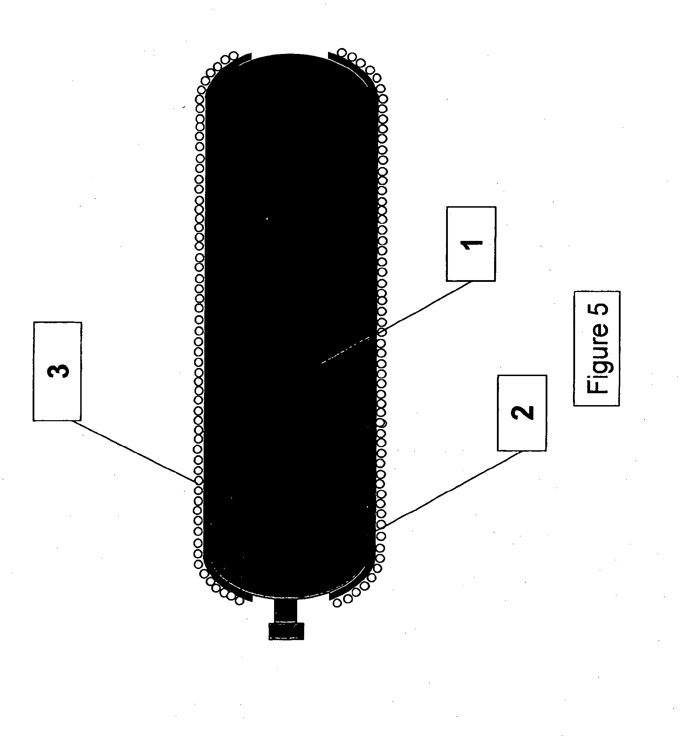

As a kind of working examples, the invention is more precisely illustrated by the following figures 1 to 5.
Figure 1 shows a segment of a stripe of the plastic film comprising the barrier material in a view from top. The plastic film shown is oriented in longitudinal direction, as symbolized by the arrow.
Figure 2 shows the ready prepared inner liner in a side view.
Figure 3 shows the winding of the plastic film comprising the barrier material onto the outer surface of the inner liner in side view. The application of adhesives used in a preferred embodiment is not shown in figure 3.
Figure 4 shows the heat treatment of the plastic film comprising the barrier material now wound around the inner liner in side view. The heat treatment is accomplished in this example by blowing hot air on the plastic film comprising the barrier material.
Figure 5 shows the ready prepared composite gas cylinder in a side view. The reference numbers show the inner liner 1 which is covered with the plastic film 2 comprising the barrier material and the outer fibre-reinforced, pressure supporting layer 3.

The pressure composite plastic gas cylinder prepared in accordance with the method of the instant invention has a very low permeability for gaseous or liquid hydrocarbons or other inflammable gases of less than 2·10⁻⁴ of the permeability of a pressure composite gas cylinder not comprising the barrier material, preferably of less than 1.5·10⁻⁴, more preferred of less than 1·10⁻⁴. The plastic film comprising the barrier material is applied as a single layer or in two or three or even more layers.

## Claims

1. Method for improving the barrier properties of composite gas cylinders for the storage of gas, by wrapping a composite gas cylinder, comprising an inner liner made of polyolefin and an outer fibre-reinforced, pressure supporting layer, with a plastic film comprising a barrier material in a winding process followed by subsequent heat treatment.

2. Method according to claim 1, whereby polymers are used as barrier material having a very low permeability for hydrocarbons comprising polyamides like polyhexamethylene adipineamide or poly-epsilon-caprolactame or polyesters like polyethylene terephthalete or polybutyleneterephthalate or halogen substituted polymers like polyvinylchloride (PVC) or polyvinylidenechloride (PVDC) or fluorine comprising polymers such as polytetrafluorineethylene (PTFE) or polyvinylalcohol (PVA).

3. Method according to claim 1 or 2, whereby the inner liner is made of a polymer comprising polyethylene or a copolymer of ethylene with other olefins having 3 to 10 carbon atoms or polypropylene or a copolymer of propylene with ethylene or other 1-olefins having 4 to 10 carbon atoms and is manufactured using such polymers by blow moulding, or extruding or by injection moulding.

4. Method according to any one of claims 1 to 3, whereby the fibre-reinforced, pressure supporting layer is applied by winding fibre-reinforced elements comprising glass fibre bands or treads around the outer surface of the inner liner according to the filament winding process.

5. Method according to any one of claims 1 to 3, whereby the fibre-reinforced, pressure supporting layer is applied by winding fibre-reinforced elements comprising glass fibre bands or treads around the outer surface of the plastic film comprising the barrier material coated onto the outer surface of the inner liner according to the filament winding process.

6. Method according to any one of claims 1 to 5, whereby an epoxy-polymer or a similar adhesive or a hot melt adhesive is used to improve the adhesion between the inner liner and the fibre-reinforced, pressure supporting layer or between the inner liner and the plastic film comprising the barrier material or between the plastic film comprising the barrier material and the fibre-reinforced, pressure supporting layer.

7. Method according to any one of claims 1 to 6, whereby stripes of the plastic film comprising the barrier material are wound onto the outer surface of the inner liner and whereby adhesives are used to improve the adhesion which comprise an epoxy-polymer or a similar ahesive or which comprise a hot melt adhesive or another solvent free adhesive composition.

8. Method according to any one of claims 1 to 6, whereby stripes of the plastic film comprising the barrier material are wound onto the outer surface of the composite gas cylinder and whereby adhesives are used to improve the adhesion which comprise an epoxy-polymer or a similar means or which comprise a hot melt or another solvent free adhesive composition.

9. Method according to any one of claims 1 to 8, whereby a heat treatment is applied in a furnance or by blowing hot air at a temperature of from 60 to 200 °C, preferably from 70 to 150 °C, more preferred from 80 to 130 °C, over a time period depending from the temperature applied of about 5 seconds to 5 minutes, preferably from 10 seconds to 3 minutes.

10. A high pressure composite plastic gas cylinder prepared according to any one of claims 1 to 9, which is wrapped at least partially with a plastic film comprising a barrier material and has a permeability for gaseous or liquid hydrocarbons or other inflammable gases of less than 2·10⁻⁴ of the permeability of a pressure composite gas cylinder not comprising the barrier material.

11. A high pressure composite plastic gas cylinder according to claim 10, whereby the plastic film comprising barrier material is applied in two or three or more layers.

12. Use of a high pressure composite gas cylinder according to claim 10 or 11 as a fuel tank in gas driven automotive vehicles equipped with a combustion engine.

## Patentansprüche

1. Verfahren zum Verbessern der Barriereeigenschaften von Verbundstoff-Gaszylindern zum Speichern von Gas durch Umwickeln eines Verbundstoff-Gaszylinders, der eine Innenauskleidung, die aus Polyolefin hergestellt ist, und eine äußere, faserverstärkte, druckfeste Schicht umfasst, mit einer Kunststofffolie, die ein Barrierematerial umfasst, durch ein Wickelverfahren, gefolgt von einer darauffolgenden Hitzebehandlung.

2. Verfahren nach Anspruch 1, wobei Polymere als Barrierematerial verwendet werden, die eine sehr geringe Durchlässigkeit für Kohlenwasserstoffe aufweisen und Polyamide wie Polyhexamethylenadipinamid oder Poly-epsilon-caprolactam oder Polyester wie Polyethylenterephthalat oder Polybutylenterephthalat oder halogensubstituierte Polymere wie Polyvinylchlorid (PVC) oder Polyvinylidenchlorid (PVDC) oder Fluor umfassende Polymere wie Polytetrafluorethylen (PTFE) oder Polyvinylalkohol (PVA) umfassen.

3. Verfahren nach Anspruch 1 oder 2, wobei die Innenauskleidung aus einem Polymer hergestellt ist, das Polyethylen oder ein Copolymer von Ethylen mit anderen Olefinen, die 3 bis 10 Kohlenstoffatome aufweisen, oder Polypropylen oder einem Copolymer von Propylen mit Ethylen oder anderen 1-Olefinen, die 4 bis 10 Kohlenstoffatome aufweisen, umfasst und unter Anwendung solcher Polymere durch Blasformen oder Extrudieren oder durch Spritzgießen hergestellt wird.

4. Verfahren nach einem der Ansprüche 1 bis 3, wobei die faserverstärkte, druckfeste Schicht durch Wickeln von faserverstärkten Elementen aufgebracht wird, die Glasfaserbänder oder Profile um die Außenfläche der Innenauskleidung dem Filamentwickelverfahren entsprechend umfassen.

5. Verfahren nach einem der Ansprüche 1 bis 3, wobei die faserverstärkte, druckfeste Schicht durch Wickeln von faserverstärkten Elementen aufgebracht wird, die Glasfaserbänder oder Profile um die Außenfläche der Kunststofffolie umfassen, die das Barrierematerial umfasst, das auf die Außenfläche der Innenauskleidung dem Filamentwickelverfahren entsprechend aufgebracht ist.

6. Verfahren nach einem der Ansprüche 1 bis 5, wobei ein Epoxypolymer oder ein ähnlicher Klebstoff oder ein Schmelzklebstoff zum Verbessern der Haftung zwischen der Innenauskleidung und der faserverstärkten, druckfesten Schicht oder zwischen der Innenauskleidung und der Kunststofffolie, die das Barrierematerial umfasst, oder zwischen der Kunststofffolie, die das Barrierematerial umfasst, und der faserverstärkten, druckfesten Schicht verwendet wird.

7. Verfahren nach einem der Ansprüche 1 bis 6, wobei Streifen der Kunststofffolie, die das Barrierematerial umfasst, auf die Außenfläche der Innenauskleidung gewickelt werden und wobei Klebstoffe zum Verbessern der Haftung verwendet werden, die ein Epoxypolymer oder einen ähnlichen Klebstoff umfassen oder die einen Schmelzklebstoff oder eine andere lösungsmittelfreie Klebstoffzusammensetzung umfassen.

8. Verfahren nach einem der Ansprüche 1 bis 6, wobei Streifen der Kunststofffolie, die das Barrierematerial umfasst, auf die Außenfläche des Verbundstoff-Gaszylinders gewickelt werden und wobei Klebstoffe zum Verbessern der Haftung verwendet werden, die ein Epoxypolymer oder einen ähnlichen Klebstoff umfassen oder die einen Schmelzklebstoff oder eine andere lösungsmittelfreie Klebstoffzusammensetzung umfassen.

9. Verfahren nach einem der Ansprüche 1 bis 8, wobei eine Wärmebehandlung in einem Ofen oder durch Blasen von heißer Luft bei einer Temperatur von 60 bis 200 °C, bevorzugt 70 bis 150 °C, noch bevorzugter 80 bis 130 °C, über eine Zeitspanne, je nach der angewendeten Temperatur, von etwa 5 Sekunden bis 5 Minuten, bevorzugt 10 Sekunden bis 3 Minuten angewendet wird.

10. Hochdruck-Verbundstoff-Kunststoffgaszylinder, der nach einem der Ansprüche 1 bis 9 hergestellt wird und der mindestens teilweise mit einer Kunststofffolie umwickelt wird, die ein Barrierematerial umfasst und eine Durchlässigkeit für gasförmige oder flüssige Kohlenwasserstoffe oder andere entzündliche Gase von weniger als 2·10⁻⁴ der Durchlässigkeit eines Verbundstoff-Druckgaszylinders, der kein Barrierematerial umfasst, aufweist.

11. Hochdruck-Verbundstoff-Kunststoffgaszylinder nach Anspruch 10, wobei die Kunststofffolie, die Barrierematerial umfasst, in zwei oder drei oder mehr Schichten aufgebracht wird.

12. Verwendung eines Hochdruck-Verbundstoff-Gaszylinders nach Anspruch 10 oder 11 als Treibstofftank in gasgetriebenen Fahrzeugen, die mit einem Verbrennungsmotor ausgestattet sind.

## Revendications

1. Procédé d'amélioration des propriétés de barrière de bouteilles à gaz composites pour l'entreposage de gaz, par enveloppement d'une bouteille à gaz composite, comprenant un revêtement interne constitué de polyoléfine et une couche externe supportant la pression, renforcée par des fibres, par un film plastique comprenant un matériau barrière dans un procédé d'enroulement, suivi par un traitement thermique consécutif.

2. Procédé selon la revendication 1, dans lequel des polymères sont utilisés comme matériau barrière présentant une très faible perméabilité pour des hydrocarbures comprenant des polyamides comme le poly(hexaméthylèneadipamide) ou le poly-epsilon-caprolactame ou des polyesters comme le poly(téréphtalate d'éthylène) ou le poly(téréphtalate de butylène) ou des polymères substitués par halogène comme le poly(chlorure de vinyle) (PVC) ou le poly(chlorure de vinylidène) (PVDC) ou des polymères comprenant du fluor tels que le polytétrafluoroéthylène (PTFE) ou le poly(alcool vinylique)(PVA).

3. Procédé selon la revendication 1 ou 2, dans lequel le revêtement interne est constitué d'un polymère, comprenant le polyéthylène ou un copolymère d'éthylène avec d'autres oléfines comprenant 3 à 10 atomes de carbone ou le polypropylène ou un copolymère de propylène avec de l'éthylène ou d'autres 1-oléfines comprenant 4 à 10 atomes de carbone, et est préparé à l'aide de tels polymères par moulage par soufflage ou par extrusion ou par moulage par injection.

4. Procédé selon l'une quelconque des revendications 1 à 3, dans lequel la couche supportant la pression, renforcée par des fibres, est appliquée par enroulement d'éléments renforcés par des fibres comprenant des bandes ou des fils en fibre de verre autour de la surface externe du revêtement interne conformément au procédé d'enroulement de filaments.

5. Procédé selon l'une quelconque des revendications 1 à 3, dans lequel la couche supportant la pression, renforcée par des fibres, est appliquée par enroulement d'éléments renforcés par des fibres, comprenant des bandes ou des fils en fibre de verre, autour de la surface externe du film plastique comprenant le matériau barrière revêtu sur la surface externe du revêtement interne conformément au procédé d'enroulement de filaments.

6. Procédé selon l'une quelconque des revendications 1 à 5, dans lequel un polymère époxy ou un adhésif similaire ou un adhésif thermofusible est utilisé pour améliorer l'adhérence entre le revêtement interne et la couche supportant la pression, renforcée par des fibres, ou entre le revêtement interne et le film plastique comprenant le matériau barrière ou entre le film plastique comprenant le matériau barrière et la couche supportant la pression, renforcée par des fibres.

7. Procédé selon l'une quelconque des revendications 1 à 6, dans lequel des bandes du film plastique comprenant le matériau barrière sont enroulées sur la surface externe du revêtement interne et dans lequel des adhésifs, qui comprennent un polymère époxy ou un adhésif similaire ou qui comprennent un adhésif thermofusible ou une autre composition adhésive exempte de solvant, sont utilisés pour améliorer l'adhérence.

8. Procédé selon l'une quelconque des revendications 1 à 6, dans lequel des bandes du film plastique comprenant le matériau barrière sont enroulées sur la surface externe de la bouteille à gaz composite et dans lequel des adhésifs, qui comprennent un polymère époxy ou un moyen similaire ou qui comprennent une composition adhésive thermofusible ou une autre composition adhésive exempte de solvant, sont utilisés pour améliorer l'adhérence.

9. Procédé selon l'une quelconque des revendications 1 à 8, dans lequel un traitement thermique est appliqué dans un four ou par soufflage d'air chaud à une température de 60 à 200°C, de préférence de 70 à 150°C, plus préférablement de 80 à 130°C, pendant une durée dépendant de la température appliquée d'environ 5 secondes à 5 minutes, de préférence de 10 secondes à 3 minutes.

10. Bouteille à gaz plastique composite à haute pression, préparée selon l'une quelconque des revendications 1 à 9, qui est enveloppée au moins partiellement par un film plastique comprenant un matériau barrière et qui présente une perméabilité pour des hydrocarbures gazeux ou liquides ou d'autres gaz inflammables inférieure à 2.10⁻⁴ de la perméabilité d'une bouteille à gaz composite à pression, ne comprenant pas le matériau barrière.

11. Bouteille à gaz plastique composite à haute pression, selon la revendication 10, dans laquelle le film plastique comprenant un matériau barrière est appliquée en deux ou trois couches, ou plus.

12. Utilisation d'une bouteille à gaz composite à haute pression, selon la revendication 10 ou 11, comme réservoir à carburant dans des véhicules automobiles à gaz équipés d'un moteur à combustion.
